# EUROPEAN PATENT APPLICATION

(11) **EP 1 852 397 A2**
(43) Date of publication of application: **07.11.2007**
(21) Application number: 05823009.5
(22) Date of filing: 22.11.2005
(51) Int. Cl.: C02F 1/04

(54) **METHOD FOR THE INDUSTRIALISED PRODUCTION OF OLIVE OIL MILL BY-PRODUCTS AND PRODUCT THUS OBTAINED**

(30) Priority: 29.11.2004 ES 200402869
(71) Applicant: Biolives, Coop. V., 46837 Quatretonda (ES)
(72) Inventor: CANET BENAVENT, Miquel, 46838 LLUTXENT (ES)
(74) Representative: SUGRANES - VERDONCES - FERREGÜELA
(86) International application number: PCT/ES2005/000635
(87) International publication number: WO 2006/058938

(57) **Abstract**

The invention relates to a method for the industrialized production of olive oil mill by-products and to the product thus obtained. According to the invention, fresh alpeorujo (1) from the olive oil mill is subjected to a series of steps that can be used to obtain valued by-products hitherto regarded as waste. For said purpose, the alpeorujo (1) is dehydrated (4) by means of centrifugation. The solid fraction (6) obtained first is dried (9) for the subsequent separation of the pulp (12) and the stone (13), while the liquid fraction (5) in centrifuged (18) in order to separate the solids (19) and to obtain raw vegetable water (20) which, following centrifugation, (21), biological treatment (25), alcoholic fermentation (26) and filtration (27), is concentrated (32) using a multi-effect vacuum evaporator, such as to produce a multipurpose concentrate (34) and condensed water (35) which move to a column used to purify the volatile substances (36) in order to separate the alcohol (38) from the water (43) for the final purification step which is performed using respective purifying columns (39 and 45).

## Description

### PURPOSE OF THE INVENTION

The present invention refers to an integral procedure for the industrialisation and assessment of olive oil press sub-products in centres able to carry out the whole process such as olive cake treatment plants or pomace oil reprocessing plants, or by separating part of the processes carried out in olive oil presses, dehydrating centres and reprocessing or olive cake plants.

The purpose of the invention, therefore, is to provide a new procedure that contributes a series of advantages and innovations that will enable the initial sub-product to be decomposed into several different products, using industrial techniques that will reduce current operating costs, at the same time as reducing investment costs, increasing the production capacity of the process, and guaranteeing maximum environmental return, by transforming them into usable products that were previously problem residues.

Another purpose of the invention is the development of a concentrated liquid of organic material from olive oil mill waste water alperujo or alpechín. This product contains a high concentration of polyphenols normally found in the olive and has a high antioxidant capacity among other characteristics. The same product has excellent properties as a fertiliser when applied to the crops.

The present invention is directed towards the food, cosmetic, pharmaceutical and farming sectors.

### BACKGROUND TO THE INVENTION

Traditional olive cake treatment plants are centres dedicated to recovering pomace olive oil using a solvent extraction system.

Using the raw material, pomace, which is the solid part resulting from pressing the crushed olive mass in the so-called traditional press system, with a moisture content of approximately 28% - 35%, or with a moisture content of 45% - 52 % in the three-phase centrifuge system; the pomace is introduced into a drying tunnel or trommel, which by using a current of hot air, dries it until the moisture content reaches 6% - 10 % .

When the pomace is dry, it is introduced into the extractor to extract the olive pomace fat content with solvents that will absorb the oil contained in the dry pomace, the solvent then being recovered by distillation and subsequent condensation, this system thus manages to reduce solvent consumption by re-using that recovered in distillation.

In the last ten years, the increasing implementation of the two-phase system has meant that traditional olive cake treatment plants have had to restructure, as they are now receiving pomace produced by the traditional olive oil mills with 30% moisture, or from olive oil presses with the 3 phase process with a moisture content of 45%- 52 % .

Nowadays, the by-product to treat, olive waste residue, alperujo, has a moisture content of between 56% - 70 %, and a viscous consistency with serious transport problems, as well as being highly corrosive.

The normal alperujo waste residue treatment in olive cake treatment plants consists of carrying out a preliminary extraction of the pomace oil by centrifugation before pitting, followed by drying in a current of hot air. This drying is very costly in energy, since the olive vegetation water is incorporated in the waste residue to be dried and for this reason there is a very high amount of moisture to be evaporated. The problems that occur with the waste residue in the drier, are mainly caused by balls which form in the product, preventing efficient drying. Also, this drying causes serious problems to the mechanical state of the drying tunnels, due to the high corrosive power of the alpechin and abrasiveness of the stones.

It should be noted that in pomace with 60% moisture, the amount of water to evaporate is 70% more than in a traditional pomace with 50 % moisture. And when the moisture content of the waste residue increases to 70%, the amount of water to evaporate increases to 140% of that in traditional 3-phase pomace. The increase in moisture content up to 70 % is not that uncommon given that the 2-phase pomaces tend to have over 60% moisture, and because many olive oil presses have incorporated pitters into their processes, thus increasing the moisture content and the problem of ball formation in the dryer.

The increase in total water to evaporate caused a reduction in the processing capacity of the olive cake treatment plants, therefore the number of dryers had to be doubled, as well as having to construct large ponds to store the wet by-product. The new driers have new materials and new technologies incorporated into their construction. In some cases rotary driers have been installed in the same olive oil press, a two phase pre-drying being performed which enables the pomace to be delivered to the olive cake treatment plant with a previously agreed moisture content.

The problem caused by the extraction of the alperujo waste must also be pointed out, since it also includes alpechin the extraction and action of the solvents is notably difficult.

Initially, the solution provided by the olive oil presses to treat this by-product has been the same that has been applied to the traditional and three-phase pomace, that is, drying by hot air flow in a rotary trommel, and dissolving the fatty compounds using solvents in the extractor. But the value of the products obtained was no recompense for the serious transport, corrosion and extraction problems, which led the pomace sector to demand payment from the olive presses for part of the costs. In some cases where this was refused, demanding that the alperujo be withdrawn.

The texture of the new by-product, together with the increasing price of olive oil, and the due to the non-acceptance of the new by-product by the olive cake treatment plants, led to the proliferation of so-called reprocessing centres which were dedicated to collecting the alperujo from the olive press mills, to subject them to two or three phase centrifugation, with the main objective of recovering part of the oil liberated; subsequently the exhausted pomace was dried by mechanical means, or deposited in large ponds or streams so that it might dry out over summer.

Finally these reprocessing centres have become the new olive cake treatment plants, the majority of them provided with driers and extractors, as well as means of producing energy in higher capacity installations.

Alperujo is the by-product resulting from the production of olive oil using the known system of two-phase centrifugation, or ecological system, because unlike the three phase system, it does not produce alpechin. Alperujo partly consists of the flesh or pulp of the olive, the olive stone, the vegetation water of the olive or alpechin, and the water added in the process in the olive oil presses. The alperujo is incorporated into the olive vegetation water in a proportion that varies between 60% and 70 %. This vegetation water includes fat, sugars, organic acids, poly-alcohols, pectins, polyphenols, and minerals, among other compounds. The olive stone, pulp and oil make up the remaining 30% or 40%.

The alperujo is a serious environmental problem for olive producing areas, mainly due to the strong phytotoxicity of the polyphenols that are dissolved in the alpechín; the presence of fat, which makes the transfer of oxygen difficult in aqueous media and particularly due to its high COD and BOD (chemical oxygen demand and biological oxygen demand), which leads to a decrease in oxygen concentration in the water.

It is for this reason that alperujo needs to be suitably industrialised, which would be economically feasible and eliminate the environmental effects caused by its uncontrolled dumping.

The concentrated organic compound which can be obtained from its treatment contains different concentrations of polyphenolic compounds with very interesting characteristics. Olives contain different phenolic compounds, one of which is oleuropein glycoside, found in green fruits. This is enzymatically hydrolysed into hydroxytyrosol and oleanic acid in the crushing and grinding stage in the production of olive oil (Vasquez et al., 1974; Capasso et al., 1992a), so that in the alperujo, the oleuropein is reduced and hydroxytyrosol is increased. It also has to be taken into account that these phenols are water soluble, therefore they tend to remain in the vegetation water contained in alperujos and alpechins. Other phenols such as caffeic, vanillic, ferulic and p-coumaric acids (which also have antioxidant capacity) are also present in alperujos and alpechins, but in lower concentrations.

Hydroxytyrosol has been attributed with a high antioxidant capacity with anti-free radical, anti-inflammatory, antimicrobial, etc., properties. Metabolic activity in the cells produce free radicals, which react with natural lipid molecules, producing new radicals called peroxides and hydroperoxides. Hydroxytyrosol, as an antioxidant is capable of preventing the formation of new free radicals in cell systems. Thus, Visioli et al, have shown that phenolic extracts of olives are capable of inhibiting the oxidation of low density lipoproteins (LDL) *in vitro.*

Due to the properties possessed by these polyphenols and in particular hydroxytyrosol, which is found in higher proportions, there has been a proliferation of many different techniques and methods in the last few years, to separate them from alperujo and alpechin, and possible applications. In fact the Japanese patent JP 08119825 describes the use of hydroxytyrosol as the active ingredient in formula preparations for use in skin treatments.

Many investigations have been carried out with the aim of finding reliable and cheap analytical methods which can identify hydroxytyrosol and its derivatives. Other studies have been directed towards obtaining the polyphenols present in the residues from the production of olive oil on an industrial scale. Many of these methods have problems due to difficulty in the extraction as a result of the raw material, in some cases, and in others, owing to the low yields obtained in the extraction process, making them more expensive and therefore making them technically and economically non-viable.

Different authors have looked at obtaining hydroxytyrosol and other components using extraction with solvents. Thus, the Japanese patent JP9078061 uses a hydroxytyrosol extraction procedure from olive leaf extracts using methanol. Patent ES 2051238 describes a procedure for obtaining organic substances such as mannitol, hydroxytyrosol, tyrosol, etc, from alpechin using a counter-current liquid-liquid extraction.

Other procedures try to synthesise hydroxytyrosol chemically and enzymatically. Chemically (R. Capasso et al., J. Agric. Food Chem. 1999) reduced 3,4-dihydroxyphenylacetic acid with lithium and aluminium hydride using tetrahydrofuran as solvent. Enzymatically (patent ES 2170006) hydroxytyrosol is obtained by reacting tyrosol as a precursor, mushroom tyrosine which acts as a catalyser, and vitamin C.

As regards procedures that use hydrothermal systems, patent ES 2199069 performs hydrothermal treatment on alperujo, and other by-products at temperatures between 180 and 240° C and at high pressure. After a time to allow the reaction to cool, the mixture is filtered and the liquid fraction is recovered. A similar process is used in patent ES 2145701 but in this case using the olive stone as the raw material. There is another patent, ES 2177457 which carries out a steam explosion over the alperujo. The product obtained is treated by two stage chromatography to obtain an extract which contains 90% -95% pure hydroxytyrosol.

As regards using the alperujo and alpechin for the manufacture of fertilisers, there are procedures that make mixtures of alpechin with sewage sludge, tree vegetation remains, purines, etc., to obtain organic fertilisers after a composting treatment (patent ES 518.595). Another procedure made a mixture of the alpechin with substrates of vegetable origin (cellulose paste) or mineral origin (sepiolite or vermiculite) and optionally, mineral salts (patent ES 2 037 606).

There is another procedure where the alpechin or alperujo, after a biochemical process, is absorbed by lignocellulose materials and subjected to anaerobic processes and immediately afterwards to aerobic processes, to finally obtain an organic fertiliser (patent ES 2 103 206).

Finally, another procedure is known that makes a leaf fertiliser based on alpechin, to which is added, among other elements, oxygen, sulphur, and copper (patent ES 2 162 739).

### DESCRIPTION OF THE INVENTION

The procedure for the industrialisation of olive oil press by-products proposed by the invention, completely solves the previously explained problem, in the different mentioned aspects, inasmuch as it is going to apply different solutions to each product, looking into all the most suitable technical processes according to the state of the art where the product is treated.

The procedure purpose of the invention, consists of applying different treatments to by-products resulting from the separation of olive oil in olive oil presses.

What it does attempt is to give value to the residual liquid fraction without destroying or decomposing it, as happens in traditional processes for treating alperujos, in such a way that a greater number of finished products may be obtained, the process achieving the highest possible returns. Besides the finished products that are obtained in the normal alperujo treatment processes, such as the oil and dry stones and pulp, a concentrated liquid product with multiple applications and of great value is obtained from the olive vegetation water, separating it from the alperujo before placing it in the drier.

Thus, a double benefit is obtained, firstly, it avoids the evaporation of a large amount of water in the drying trommel, which brings about a significant energy saving; secondly, a valuable liquid product with many applications is obtained.

The procedure, therefore, starts with subjecting the fresh alperujo received from the plant to a solid-liquid separation or dehydration by centrifugation, into a dehydration decanter, with a work flow of 15000 to 20000 kg/h, with performances that will quintuplicate current yields from alperujo reprocessing, therefore the investment in decanters is less when working according to the invention. Also, in the dehydration by centrifuge it is not necessary to previously heat the paste, which means a considerable saving in energy and machinery.

The liquid fraction obtained in this separation is composed of slurries with a moisture content of around 75% - 80 % and with 20% - 25 % solids made up of finings and olive pulp. The remaining 75% - 80 % is mainly alpechin with a percentage of oil that varies between 3% and 6%, depending on the extraction in the press mill. All the liquid fraction is collected by a pump and stored, being left for 3 to 10 days with the aim of breaking down the emulsions and aiding the subsequent recovery of oil, separating the oily fraction and the olive vegetation water, or alpechin from the dredged solids, pulp and finings. The separated solid part has a moisture content of approximately 45% - 55 % , which is similar to the traditional three-phase pomace.

This first phase purpose of the invention completely reduces the drying problems of the alperujo, by eliminating more than 50% of the moisture from this, thus doubling the capacity of the drier. The costs of heating all the alperujo by the drier, as well as the cost of pumping it are also reduced by 50%..

The solid fraction resulting from dehydration will rapidly ferment therefore, it is advisable to stabilise it. To stabilise the pomace, it is dried in drier with a hot air flow produced by a combustion chamber fuelled by olive cake or other solid combustion fuel or with exhaust gases from generator engines or cogeneration. The pomace is stabilised with approximately 8% moisture, which enables it to be extracted with traditional solvents, to obtain 3%- 6 % pomace oil.

The drier is equipped in such a way that it does not emit ash or dust into the atmosphere, and only emits water vapour from the drying process. This vapour will be free of bad smells, given that the process is carried out on non-fermented materials, and a line process with a first phase that does not allow storing which could give rise to fermentations and oxidations which would reduce the value of the final product.

The application of this process in the overall procedure object of the invention is particularly notable given that the pre-drying of the alperujo by centrifugation prevents balls forming in the drier, prevents corrosion produced by the alpechin sugars and their acid pH, and doubles the processing capacity in kilograms of dehydrated pomace, compared to its capacity in alperujos.

The drier performs the same function in the traditional system as in invention process. The basic difference lies in that the traditional system has to evaporate all the alpechin contained in the alperujo, which means double the water is evaporated. Therefore, it could be said that in a traditional plant, to dry the alperujos it would need at least double the drying than in the process object of the invention, given that the efficiency of the drying is higher in volume of water evaporated in pomace as a result of the dehydration than in alperujo as it produces balls due to its higher moisture content.

On leaving the drier, the dry product is broken down, making its pre-cooling easier, and is joined up to a cascade process, where by using pneumatic aspiration the pulp is separated from the stone, which due to being heavier will fall into the lower part of the cascade to then be shipped and stored. In case a dirty stone is obtained from the pulp, or balls appear, it is then crushed and sieved. In this way, the pulp is obtained on one side and the stone on the other.

On the other hand, the alpechin separated in the process purpose of the invention is given value, obtaining other products of value. In a traditional alperujo drier the water is evaporated leaving the alpechin mixed in with the solid fraction treated in the drier, therefore its subsequent extraction is impossible, at the same time it interferes in the oil solvent extraction process, also causing greater wear on the drying equipment due to the acidity of the alpechin.

The liquid fraction or slurry obtained in the dehydration process that has been lying in silos or tanks, is mixed and heated until it reaches a temperature of 35 - 45° C for 40 to 60 minutes, then it moves on to a new centrifugation process. Centrifugation with a horizontal decanter is recommended for this clearing phase, exclusively separating the liquid phase from the solid, which subsequently leads to a doubling of production capacity compared to the three phase system with the same decanter.

The centrifugation can also be performed on the slurries by the three-phase system, recovering the majority of the oil by a second centrifugation in this phase of the process. In this case, they would be separated into a liquid or alpechin phase, a light or oil phase and a solid phase consisting of pulp with 65%- 72 % moisture, which will go to the drier along with the solid phase separated in dehydration. The light or oil phase will be passed through a vibrating filter and then to a vertical centrifuge where it will be force decanted and washed. The alpechin is also passed through a vibrating filter to remove any solids in the suspension which would make its subsequent clearing difficult.

With this system, the invention will enable the capacity of the process to at least double, besides making it possible to work in 3 phases (separation of pulp-alpechin and oil) without adding water. If the operating process is only clearing without the recovery of oil, its capacity would be three times that compared to reprocessing alperujos, since only the liquid fraction is reprocessed which is 50% of the initial alperujo, this implies that, unlike other alperujo treatment procedures, less machinery, a higher volume and less energy is used, since only the aforementioned fraction needs to be heated and not all the alperujo.

The alpechin fraction obtained in the previous stage contains a large quantity of finings and solids in suspension which makes the filtering process difficult, and prevents the concentrator from operating well, therefore it is advisable to clear it by centrifugation in a nozzle centrifuge, which will remove the greater part of the solids and finings. A light fraction, oil, is also recovered, which is separated by decanting and added to the oil fraction previously separated, if it has been a 3 phase operation.

With this process, the alpechin is separated from the alperujo, to which the minimum of water is added in the olive press mills and improves the performance in the alpechin concentration process.

Although filtration and concentration of a 3-phase alpechin is possible with 3-4° Brix, when an attempt is made to apply the process to an alpechin of 9 - 14° Brix which results from the process of the invention, it is impossible to filter, just as its concentration in "Brix" is tripled so too are the concentrations of dissolved solids, in suspension and sedimentable.

The impact of this phase of the process of the invention is fundamental as a whole, given that it enables enriched alpechin to be processed, without adding water, a fact that is justified by the subsequent marketing of the humic extract, 35° - 45° Brix, but also by obtaining alcohol from the alcoholic fermentation of the sugars it contains. Also, the concentrated product obtained can be used as a raw material for extracting the polyphenols present in it, using diverse techniques, or for use in formulas for nutraceutic and functional food products.

The recovered oil is centrifuged and washed to remove solid particles or finings and the water resulting from oil recovery processes. The removal of solids is carried out by means of ejections, and the wash water is added to the alpechin. This recovered oil will be refinable with physiochemical quality parameters much higher than pomace oils extracted with solvents in traditional olive cake treatment plants.

The two previous horizontal decanter centrifugation procedures could be combined into one centrifugation stage operating at 3 phases. in this case, the alperujo is centrifuged, the oil, crude alpechin and pomace is obtained. Using the same number of centrifuges as in the previously described process, the operating volume is 4 times less. The alperujo has to be previously heated in a blender with hot water or steam jacket. Water needs to be injected into the decanter to be able to carry out this centrifugation. In this case, water would not be injected but the cleared alpechin obtained in a nozzle centrifuge.

The pomace obtained contains 3% - 5 % more moisture than in the process previously described using two centrifugation procedures. The crude alpechin is centrifuged to be cleared in a disc nozzle centrifuge, which operates continuously and using ejections.

The cleared alpechin will then move on to alcohol fermentation with the aim of recovering the fermented alcohols. Similarly, it could move on to evaporation of the fresh "alpechins" when the concentrated alpechin might be used for animal feed, or obtaining other compounds that are destroyed by alcohol fermentation.

Depending on the required purpose of the concentrated alpechin, it may be advisable to carry out a biological treatment with pectolytic enzymes and amylases on the fresh or fermented "alpechins", with the aim of increasing its filterability if it is going to be used as a liquid fertiliser or to improve alcohol fermentation. To achieve perfect homogenisation and thus obtain a higher yield from biological additives, the tank requires constant mixing with a stirrer at 10 - 15 r.p.m. for at least the first three hours after dispensing the additives. The fermentation process must take at approximately two weeks.

Once treated it can be then be taken directly to concentration if it is destined for feeds, or filtration using a vacuum rotary filter, when it is destined to be used as a liquid fertiliser for use in fertirrigation. The production capacity of solid residues in the filters will be at most 15 % of the volume of the filtered product. Solids in suspensions and fats will remain in the filtration cake; these solids will be assigned to the drying shed.

The filtered vegetation waters will be stored to be used later as fuel for the evaporator or the polyphenols recovery column, as will be seen later on.

The cleared or filtered alpechin contains a significant concentration of extractable polyphenols in its composition which can be used as natural antioxidants. Their concentrations are as follows:

| COMPOUND | CONCENTRATION (g/L) |
|---|---|
| Hydroxytyrosol | 1.2 - 1.6 |
| Tyrosol | 0.2 - 0.4 |
| Oleuropein | 0.1 - 0.2 |

Of the different polyphenols found, hydroxytyrosol (3,4-dyhydroxyphenyl ethanol) is the one found in a higher proportion, although there are other phenols, such as caffeic, vanillic, ferulic and p-coumaric acids.

These antioxidants can be extracted from the filtered alpechin or concentrated alpechin by recovery procedures using selective resins of these polyphenolic compounds, subsequently obtaining a compound rich in polyphenols for dietary uses in the resin regeneration stage, given the high antioxidant power of this compound.

The process for obtaining the juice or vegetation waters concentrate is preferably carried out in an evaporator, more specifically in a multiple-effect evaporator. Inside the aforementioned evaporator a vacuum is produced to enable the filtered juice to be concentrated. When the evaporation is uniform, which happens at a constant vacuum, temperature and pressure, refractometric readings of the outlet concentrate are taken periodically, until the desired concentration level is reached, normally 35 to 45° Brix. To avoid caramelisation of the sugars and the formation of hydroxymethylfurfural in the concentrate, the concentrator is operated under vacuum, not exceeding 85° C.

This system enables a stable product to be obtained, up to 90% of water being removed. After the evaporation stage, the juices or vegetation waters break down into distilled water and volatile organic compounds, and into concentrated vegetation water. This concentrate is separated and stored indefinitely. It can be used as a dietary complement, for obtaining polyphenolic compounds with antioxidant capacity using, techniques such as extraction with supercritical fluids, resin column extraction or other techniques; for pellet formulas in animal feeds, also as fertiliser, for conventional as well as ecological agriculture, since there is no phase in its industrial process where non-permissible components or practices are used, it is a fertiliser rich in fulvic acid, for its application by local and foliar irrigation.

The concentrated product has a series of characteristics that makes it novel within the pomace oil industry. It is presented as a colloidal suspension, it is dark greyish-brown, slightly acid in character, and totally free of sedimentable solids. Its physical and chemical characteristics make it a suitable for extracting polyphenols and other compounds present in it. Also, in its application on an agricultural scale, it does cause any problems such as blocking the filters of fertirrigation systems.

The organic product produced in the concentration stage and purpose of the present invention, obtained from alperujo or three phase alpechin offers different application fields:
It possesses characteristics suitable for the extraction of certain high value molecules, such as, for example, polyphenols, which have high antioxidant power. Within the nutraceutic field, the fact that the product contains the combination of characteristic polyphenols and fulvic acids of the olive, is worth mentioning.

The product obtained according to the procedure of this invention, contains a very high concentration of polyphenols and furthermore its physical nature enables these components to be extracted without carrying out pre-treatments that use toxic solvents or acid or alkaline reagents in the extraction processes. The quantitative analysis carried out by high resolution liquid chromatography gave the following concentrations:

| COMPOUND | CONCENTRATION (g/L) |
|---|---|
| Hydroxytyrosol | 12.0-16.0 |
| Tyrosol | 2.0 - 4.0 |
| Oleuropein | 1.0-2.0 |

Another application is its use as a liquid organic fertiliser rich in potassium and organic material with nutrient metal complexing power, as can be observed in the following analytical profile of the product:

| | **Percentage of total weight** |
|---|---|
| Total Organic Material | 30-40% |
| Fulvic Acids | 25-35% |
| Total Nitrogen | 0.25 - 0.50 % |
| Total Phosphorous | 1.0 - 1.3% |
| Total Potassium | 4 - 7 % |
| Moisture | 50 - 55 % |
| Density | 1.170 - 1.190 g/ml |
| pH | 4.75 - 5.25 |
| Oligo-elements: Ca, Mg, Fe, Mn, Cu and Zn | |

The product is in the liquid state with no sedimentable solids and can be used in any irrigation system. Furthermore, it can also be applied foliarly, as has already been mentioned.

Edaphic application of this product, in the doses recommended, improves the soil structure which sustains the plant, since it works to good effect improving its agronomic characteristics, texture, structure, porosity, permeability, etc., which enables the roots to be aerated better, as well as improving the water retention capacity. This aspect is very important in water shortage areas.

As regards the direct nutrient provision, it has a large amount of organic material in liquid state which prevents soil erosion over which it is applied and promotes the microbiological activity required by the plants. The application of this product provides potassium and phosphorous and nitrogen in lower amounts, as well as the secondary element magnesium and the trace elements, Fe, Mn, Cu, B and Zn.

The humic components of this product act by complexing these nutrients that cannot be taken up by the plants and are inactive in the soil, in such a way that they available for the plants, thus avoiding loss of nutritious elements due to leaching or blocking. At the same time, it promotes the germination capacity of the seeds and increases the photosynthetic capacity of the plant.

The fulvic acids have an ion exchange capacity much higher than the humic acids, therefore they chelate the nutritive ions better (Fe³⁺, Ca²⁺, Mg²⁺, Zn²⁺, and others...) and do not have the disadvantage of the humic acids, which in soil with an alkaline pH, it changes into insoluble calcium humate, thus making it difficult for the plants to absorb the calcium, in such a way that they increase the fertility of the cultivations.

On the other hand, continuing with the procedure, the distilled water in the concentrator includes volatile compounds as a result of the evaporation of the vegetation waters. These waters are passed through a volatiles purification column where the alcohols, aromas, essential oils, and by-products for industrial processing are recovered, separating the water from the rest of the products recovered.

The alcohol solution obtained in the condensers is passed through a demethylation column, with the aim of removing the methanol present in the alcohol. The alcohol obtained, once purified, can be used in human foods, as well as in industrial olive oil refining processes, or used as source of fuel which will not require alcohol rectification or demethylation.

The surplus water from the refrigeration process contains organic acids that could not be separated by distillation in the volatiles purification column. These acids give the distilled water a COD that can vary between 1200 and 6000 mg/l, therefore their waste should be monitored and suitably purified. To do this, the water is passed through an ion exchange resin column. The organic acids retained in the column are extracted at a later regeneration stage with sodium hydroxide, being transformed into their corresponding sodium salts. These are left in the wash water which is passed through countercurrently at the end of each cycle, as well as the remains of the sodium hydroxide, this wash water being re-added to the to the concentrator fuel supply alpechin or for other uses, such as washing oils or installations.

It can also be concentrated to obtain organic acids for use in animal feeds with the aim of preventing the proliferation of pathogenic microorganisms.

Before passing the contaminated water through the column again, this should be regenerated with a solution of sodium hydroxide.

After the aforementioned regeneration, the contaminated water is passed through the column. The anion fraction of the organic acids that are dissolved in the contaminated water is exchanged for OH- ions in the available active sites, which are combined with the cation fraction of the acid. When the active sites are saturated, the pH of the purified solution falls rapidly and regeneration must be carried out again. Each cycle can purify between 30,000 and 45,000 litres of contaminated water.

The purified water can be used as a fuel supply for the steam boiler, preferably using the surpluses for irrigation, in view of their quality, or for dumping in public waterways.

The procedure proposed by the invention has, on examining that described previously, a series of advantages:
- It can triplicate the process capacity of current production units, given that in the first hours of receiving the raw material, approximately 50% of the volume of the product has been separated and stabilised. On the solid fraction resulting from dehydration having been separated in this first phase, it enables the rest of the process to be simplified, with an easily transportable muddy product, and doubling the storage capacity, as only 50% of the remaining product will be processed.
- The process applies, on the whole, more profitable techniques to enrich each of the solid - liquid- oily phases, to finally make stable or enriched products available at a minimum cost taking into account the energy, exploitation, investment and environmental savings.
- The viability of the plants that apply this process is reinforced by the value of at least seven products, without detriment to others which may arise from the products obtained.
- The process guarantees the maximum environmental benefit, providing technical solutions that enable products to be given value that were residues before and which actually caused serious environmental problems.

### DESCRIPTION OF THE DRAWINGS

To complement the description being made and with the objective of helping to better understand the characteristics of the invention, in accordance with a preferred example of a practical realisation of the same, a single sheet of drawings is attached as an integral part of the aforementioned description where for illustration purposes, and not limited to this, a block diagram corresponding to the procedure of the present invention is shown.

### A PREFERRED EMBODIMENT OF THE INVENTION

On looking at the single description figure it can be seen as the procedure for the industrialisation of the olive oil mill by-products that the proposed invention is made up of a series of stages and treatments from which the desired re-valued products are obtained.

The fresh alperujo (1), coming from the oil separation plants is received in the plant by means of a hopper wagon and stored in a reception pond (2), where it passes through a two-bodied blender (3) where the alperujo is blended, and from there it drops into the feeder of a helicoidal pump with blades that inject it into the horizontal centrifuge (4) or dehydration decanter, where it is separated by centrifugation on the one side a liquid phase (5), and on the other, solids (6). The operating volume of the dehydration decanter is 15,000 to 20,000 kg/h. This liquid fraction (5) consists of slurries with a moisture content of 80% - 85 % and 15% - 20 % solids made up of finings and olive pulp. The remaining 80% - 85 % is mainly, alpechin with a percentage of 3% to 6% oil. The whole liquid fraction (5) is collected by a piston pump and stored in tanks or ponds (7), where they are left to stand for three to ten days, to break down the emulsions and improve the subsequent recovery of the oil. The solid part (6) has a moisture content of 40% - 55 % and is fed using a worm screw to the drying shed supply hopper (9).

This drying shed (9) consists of a rotary trommel drier with a hot air flow (10), produced by a combustion chamber fuelled with exhausted olive cake or other heat sources and a production capacity of 10 - 12 Tm/h. It is suitably supplied with cyclone separators that prevent ash or dust emissions into the atmosphere, and which only emits water vapour from the drying process. In this way the pomace is stabilised with a moisture content of 8%, which subsequently enables its to be separated into stone and pulp or added to the extractor for its traditional process with solvents and the obtaining of 3% - 6 % pomace oil.

On leaving the drying shed (9), the dry product moves on to a shredding and separation process in a cascade (11). The shredding helps in the pre-cooling, and the pulp (12) is separated from the stone (13) in the cascade using pneumatic suction, as due to its heavier weight it will fall to the lower part of the cascade to be transported by worm screw to the store (14) or drying shed and steam boiler fuel. For its part the separated pulp (12) will also be stored in silos (15). In a practical example, finally 14% stone and 16% pulp is obtained.

The liquid fraction (5) obtained in the dehydration process after its rest period in the ponds or tanks (7), is pumped into mixer with a jacket (16) for steam or hot water (17), from where, after reaching a temperature of 35 - 45° C and after 40 - 60 minutes of mixing, it is fed by a pump to a decanter or horizontal centrifuge (18), for centrifugation. In this stage it is separated into a solid or moist pulp phase (19), which is driven to the drying shed (9) by worm screws to combine it with the solid phase (6), separated by dehydration, of the oily alpechin (20). In the practical example 76% of oily alpechin has been obtained, with 3% oil which will be extracted later, and 24% of moist pulp.

The aforementioned alpechin fraction (20), contains finings and solids in suspension which are removed using a disc nozzle vertical centrifuge (21), which operates continuously and using ejections, with an operating volume of 10,000 kg/h. This process is carried out in a line to the end of a vibrofilter that has previously collected the alpechin from the decanter (18) from the previous process, taking advantage of the higher performance of the centrifuge under temperature conditions, also recovering a light or pomace oil fraction (22), is separated by decanting (22) and stored (23). The recovered oil (22) is subjected to centrifugation and washed in a vertical disc centrifuge to remove any solid particles present, and the resulting water from the washes is added to the alpechin.

The cleared alpechin (24) is subjected to biological treatment (25) in a tank, by dispensing biological additives with a pump. The mixture is homogenised with a mechanical mixer at 10 - 15 r.p.m. for the first three hours after dispensing the additives, after which it will move on to the fermentation process (26) which must last two weeks.

After biological treatment the alpechin is filtered with a vacuum rotary filter (27) where, in the first pass the filtration earths (28) and water are added to the tank mixture by a vacuum pump which makes a vacuum inside the filter thus producing a suction through the filter mesh with the filtration earths sticking to the surface. The earths pre-layer continues to thicken and the vacuum increases. In this filtration, approximately 1 Kg of filtration earths (28) are used for every 100 - 125 Kg of alpechin to filter. Once the pre-layer of earths is prepared the alpechin that contains the solids in suspension is made to pass through, in such a way that the aforementioned solids remain stuck to the surface of the earths while the particle free liquid crosses the layer and enters the filter drum. A scraping blade continually cuts the laminates of retained solids (29) which are removed by means of a worm screw and adding them to the drying shed (9) combined with the moist pulp flow (19).

The filtered alpechin (30) will be stored in a tank (31) which will act as an expansion feed for an evaporator (32) or a polyphenol recovery column. The concentrated juices or vegetation waters are obtained by concentrating in a multiple effect evaporator (32), a vacuum atmosphere is produced inside this, and it is connected to a vacuum pump so that the pressure gradually rises until it reaches 650 mmHg. The evaporator (32) is then immediately filled with juice, which passes through a flow meter inside the evaporator, when the level exceeds the part above the evaporation chamber, the vapour (33) introduced at a rate of 1520 Kg./h, transfers its heat to the juice inside the tubes by thermal exchange, the vapour is then condensed and exits by a sieve filter. The heated alpechin moves by convection to the body of the evaporator, recirculating through the tube to the evaporation chamber again. This convection flow is accentuated to the extent that the juice is hotter, finally causing evaporation. This stage of the operation is normally carried out under vacuum conditions and without exceeding 85° C, to prevent caramelisation of the sugars. The evaporators used mainly operate with a volume of 4000 I/h, to achieve a return on the energy process. The concentration level is approximately 90%, that is, nine out 10 parts of alpechin that enters the concentrator (32) is evaporated.

After its passage through the evaporator (32), the evaporated juices or waters are broken down into distilled water and volatile organic compounds (35) and concentrated vegetation water (34). The distilled water passes through a volatiles purification column (36) to distil the alcohols and organic acids, thus preventing them being added to the waste water. This volatiles purification column (36) is a plate distillation column through which steam (37) will pass directly into a counter-current of distilled water, until a temperature of 120° C is reached, the alcohols and other volatile compounds being collected in the upper part of the column (36), from where they will be extracted by condensation once the desired grade of alcohol is achieved, which is normally 90 - 92 °G.L.

The remaining water from the distillation process will pass through several heat exchangers with the aim of pre-heating the alpechin entering the concentrator (32), thus the energy performance of the process is optimised in each of its sequences.

The crude alcohol (38) recovered in the previous process, passes through a plate column (39) with a steam boiler, to separate the methyl alcohol (40). The de-methylated alcohol (41) will be deposited in the base of the boiler, being extracted by a pump and then stored (42) or rectified in an alcohol rectifier column.

The water (43) from the volatiles purification column (36), is purified using an ion exchange column (45) with weak anions, before moving on to a tank (44). Before the contaminated water (43) passes through the column (45) this column must be regenerated with a solution of sodium hydroxide (46).

The regeneration consists of the following steps:
- Preparation of the regenerating solution;
- Injection of the regenerating solution;
- Regeneration (1st phase);
- Regeneration (2nd phase) and slow wash;
- Rapid wash;
- Counter-wash.

In this way regeneration water (47) and purified water (48) will be obtained. This will be used for supplying the steam boiler (49) or for other internal uses of the process, sending the surplus to the refrigeration tower to supply the condensation circuit and to lower the waste water temperature of the purifier (50).

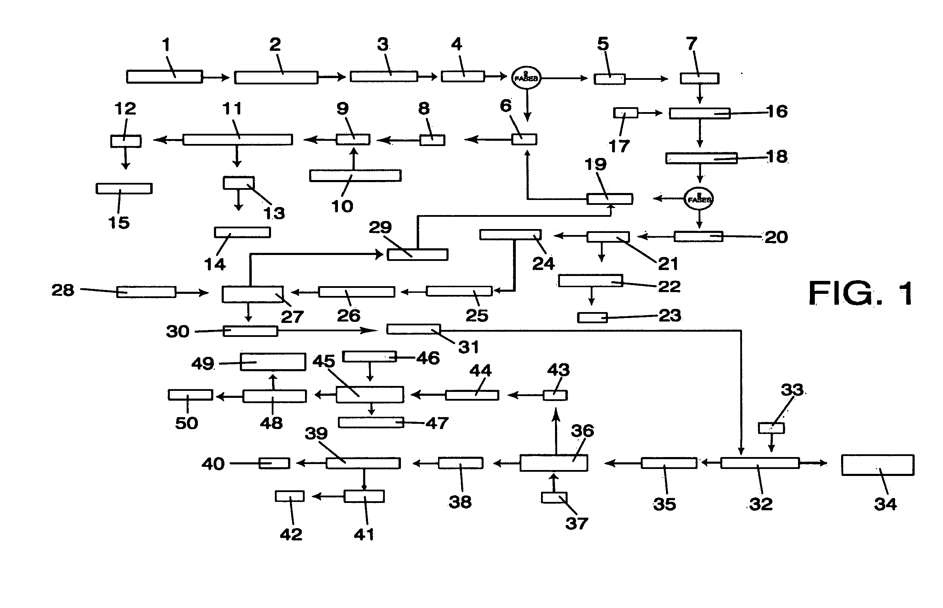

## Claims

1. Procedure for the industrialisation of olive oil mill by-products, in oil mills, olive cake treatment plants or pomace reprocessing plants **characterised** because it comprises of a first stage of dehydration of the alperujo (1) by centrifugation (4), after which a liquid (5) and another solid (6) fraction is obtained that will be subjected to a drying process (9) by a flow of hot air (10), to subsequently, once the pomace is dry, move on to separation (11) of the pulp (12) from the stone (13), while the liquid fraction (5) is subjected to a centrifugation process (18) to separate the solids in suspension (19), this is cleared in another centrifugation stage (21), where an oil fraction (22) is also separated by decanting, for its part the cleared alpechin then receives a biological treatment (25), followed by alcohol fermentation (26) and filtration (27), obtaining cleared and filtered alpechin (30), this resulting alpechin is subjected to thermal vacuum concentration and evaporation (32) to obtain concentrated alpechin, after which rectification to separate the volatiles (36) from the condensed water (35) is carried out, products purified using a demethylation process (39) or an ion exchange process (45), and finally to recover the sodium salts of the organic acids and remains of sodium hydroxide used as a regenerator.

2. Procedure for the industrialisation of olive oil mill by-products, according to claim 1, **characterised** because the separation of the pulp (12) from the stone (13) is carried out by previously breaking down the dry product by crushing, to later separate the two products by means of a cascade separation with a suction process.

3. Procedure for the industrialisation of olive oil mill by-products, according to claim 1, **characterised** because the liquid fraction (5) obtained in the dehydration process (4), before passing to the centrifugation stage (18), is subjected to a heat mixing process (16), at a temperature between 35 and 45° C, for a time of 40 - 60 minutes.

4. Procedure for the industrialisation of olive oil mill by-products, according to claim 1, **characterised** because the clearing of the alpechin (20) to remove the solids and finings in suspension, is carried out by centrifugations and by using ejections removes the greater part of the aforementioned solids and finings recovering the oil contained in the alpechin.

5. Procedure for the industrialisation of olive oil mill by-products, according to claim 1, **characterised** because the centrifugation processes (4) and (18) can alternatively be combined into one three phase centrifugation stage from which oil, pomace and alpechin is obtained.

6. Procedure for the industrialisation of olive oil mill by-products, according to claim 1, **characterised** because to achieve maximum efficiency from the biological additives that take part in the biological treatment (25), it has been foreseen that the cleared alpechin (24) may be homogenised while in the tank with constant stirring, for example with a mechanical stirrer, at 10 - 15 r.p.m., for at least the first three hours after dispensing the additives.

7. Procedure for the industrialisation of olive oil mill by-products, according to claim 1, **characterised** because the alpechin (30) concentration phase (32), is carried out by means of vacuum evaporation, and at a temperature not exceeding 85° C, obtaining a product with a concentration of 90%.

8. Procedure for the industrialisation of olive oil mill by-products, according to claim 1, **characterised** because the alcohols to decontaminate the water are recovered from the water evaporated in the alpechin (30) concentration process (32), to use this alcohol for another independen purpose or to be refined.

9. Procedure for the industrialisation of olive oil mill by-products, according to claim 1, **characterised** because the organic acids are removed from the evaporated water using an ion exchange process (45) with recovery of the organic salts.

10. Installations to carry out the procedure for the industrialisation of olive oil mill by-products, according to the previous claims 1 to 9, **characterised** because the dehydration stage by centrifugation (4) is performed in a horizontal centrifuge or dehydration decanter.

11. Installations to carry out the procedure for the industrialisation of olive oil mill by-products, according to the previous claims, **characterised** because the drying shed (9) used for drying the solid fraction without fermentation (6) obtained in the dehydration stage (4), is provided with cyclones.

12. Installations to carry out the procedure for the industrialisation of olive oil mill by-products, according to the previous claims, **characterised** because in the separation of the pulp (12) from the stone (13), the previous breaking down of the dry product is carried out using a hammer mill or a shredder.

13. Installations to carry out the procedure for the industrialisation of olive oil mill by-products, according to the previous claims, **characterised** because the clearing of the alpechin (20) is carried out by means of a disc nozzle centrifuge.

14. Installations to carry out the procedure for the industrialisation of olive oil mill by-products, according to the previous claims, **characterised** because the filtration process (27), is carried out in a vacuum rotary filter, with the formation of a pre-layer of filtering earths which enable solids in suspension to be separated.

15. Installations to carry out the procedure for the industrialisation of olive oil mill by-products, according to the previous claims, **characterised** because polyphenols recovery process is carried out by means of a column loaded with resins selective to these compounds.

16. Installations to carry out the procedure for the industrialisation of olive oil mill by-products, according to the previous claims, **characterised** because the concentration of the alpechin (30) is carried out by means of a multiple effect vacuum evaporator.

17. A concentrated product, obtained according to the procedure of the previous claims, particularly suitable for its application in feeds, for the extraction of high value compounds, and for agricultural use, **characterised** because it is present in a liquid suspension, brownish-grey in colour, with a pH of between 4.75 and 5.25, completely free of sedimentable solids, and with fulvic acids and polyphenols.

18. A concentrated product, according to claim 17, **characterised** because the concentration of fulvic acids in the aforementioned product vary between 25% and 35 %.

19. A concentrated product, according to claim 17, **characterised** because as regards the polyphenols content, it has the following composition:
| COMPOUND | CONCENTRATION (g/L) |
|---|---|
| Hydroxytyrosol | 12.0 -16.0 |
| Tyrosol | 2.0 - 4.0 |
| Oleuropein | 1.0 - 2.0 |

20. A concentrated product, according to claim 19, **characterised** because part of these polyphenols, have other phenols in their composition, such as caffeic, vanillic, ferulic and p-coumaric acids.

21. A concentrated product, according to claim 17, **characterised** because it has components with fertiliser characteristics, having the following analytical composition:
| | **Percentage of total weight** |
|---|---|
| Total Organic Material | 30 - 40 % |
| Fulvic Acids | 25 - 35 % |
| Total Nitrogen | 0.25 - 0.50 % |
| Total Phosphorous | 1.0-1.3% |
| Total Potassium | 4-7 % |
| Oligo-elements: Ca, Mg, Fe, Mn, Cu and Zn | |

22. A concentrated product, according to claim 21, **characterised** because the aforementioned compound has a moisture content between 50% and 55%, a density of 1.170 a 1.190 g/ml and a pH of 4.75 - 5.25.

23. Use of a concentrated product from the previous claims, **characterised** because it is applied for the extraction of polyphenols without carrying out pre-treatments that use toxic solvents or acid or alkaline reagents in the extraction processes.

24. Use of a concentrated product according to previous claims, **characterised** because it is applied as a liquid organic fertiliser, free of solids, usable in any irrigation system and also foliarly, rich in potassium and in an organic material with high nutrient complexing power.
